# EUROPEAN PATENT APPLICATION

(11) **EP 4 715 355 A1**
(43) Date of publication of application: **25.03.2026**
(21) Application number: 24306538.0
(22) Date of filing: 18.09.2024
(51) Int. Cl.: G01K 13/02, G01K 13/024

(54) **GAS PROCESSING TEMPERATURE MEASUREMENT SYSTEM**

(71) Applicant: Technip Energies France, 92741 Nanterre Cedex (FR)
(72) Inventor: Di Pofi, Jose, 92741 Nanterre Cedex (FR); Wijnhamer, Alexander, 92741 Nanterre Cedex (FR); Robbers, Jacobus, 92741 Nanterre Cedex (FR); den Tek, Antoine, 92741 Nanterre Cedex (FR); Derakhshani, Sayed, 92741 Nanterre Cedex (FR)
(74) Representative: Edson, Russell Gregory

(57) **Abstract**

Systems and related methods including a gas processing component, a gas conduit extension, and a temperature measurement device. The gas processing component includes a mixing section where a first gas flow mixes with a second gas flow, and a gas conduit extension mounted at an outlet of the gas conduit having a gas conduit internal passageway for carrying the first gas flow to the mixing section. The gas conduit extension includes an internal passageway extension in fluid communication with the gas conduit internal passageway and an expansion opening extending from exterior of the gas conduit extension to the internal passageway extension. The temperature measurement device includes an elongated portion extending through the expansion opening into the internal passageway extension, and a temperature sensor inside the elongated portion located in the internal passageway extension to measure a temperature of the first gas flow prior to mixing with the second gas flow.

## Description

### BACKGROUND

Various industrial processes involve mixing gas at different temperatures, such as in food processing, pharmaceutical manufacturing, oil refining, cracking processes, steam methane reforming (SMR), or the like. Monitoring the performance of gas flow (e.g., the temperature of the gas flow) during these industrial processes is essential for product quality measurement, process control, catalyst performance evaluation, and overall reactor efficiency optimization. In particular, for gas processing components (e.g., chemical reactors, such as steam reforming units used in SMR processes or the like), gases at different temperatures may be mixed together. It may be beneficial to measure the temperatures of those gases before they mix together, such as the temperature of the syngas exiting a catalyst tube in a chemical reactor before syngas mixes with other gases. As such, improved temperature measurement systems are desired.

### BRIEF SUMMARY

The present disclosure provides a temperature measurement system for use in providing temperature measurements of a first gas exiting a gas conduit prior to this first gas mixing with a second gas. In one example, a temperature measurement system includes a gas processing component, a gas conduit, a gas conduit extension, and a temperature measurement device. The gas processing component may include an internal volume with a first mixing section in which a first gas flow mixes with a second gas flow. The gas conduit may include a gas conduit internal passageway configured to carry the first gas flow to the first mixing section, with a gas conduit outlet end of the gas conduit in the internal volume. The gas conduit extension may be mounted at the gas conduit outlet end. The gas conduit extension may include an internal passageway extension in fluid communication with the gas conduit internal passageway, the internal passageway extension terminating at a gas conduit extension outlet end in fluid communication with the first mixing section. The gas conduit extension may also include an expansion opening extending from an exterior of the gas conduit extension to the internal passageway extension. The temperature measurement device may include an elongated portion extending through the expansion opening into the internal passageway extension. The temperature measurement device may include a temperature sensor inside the elongated portion and located in the internal passageway extension to measure a temperature of the first gas flow prior to mixing with the second gas flow.

Another aspect of the disclosure provides for a method of optimizing gas mixing processes by monitoring operating conditions based on a temperature measurement. In one example, the method is directed to using a system including a gas processing component, a gas conduit, a gas conduit extension, and a temperature measurement device. The method includes flowing, at a first operating condition, a first gas flow through a gas conduit internal passageway of the gas conduit positioned in an internal volume of the gas processing component to a first mixing section of the internal volume in which the first gas flow mixes with a second gas flow. The gas conduit extension is mounted at a gas conduit outlet end that includes an internal passageway extension in fluid communication with the gas conduit internal passageway. The internal passageway extension terminates at a gas conduit extension outlet end in fluid communication with the first mixing section. The gas conduit extension also includes an expansion opening extending from an exterior of the gas conduit extension to the internal passageway extension. The method also includes receiving, from a temperature sensor inside of an elongated portion of a temperature measurement device extending through the expansion opening into the internal passageway extension, a temperature measurement of the first gas flow prior to mixing with the second gas flow.

### BRIEF DESCRIPTION OF THE DRAWINGS

A further understanding of the nature and advantages of various embodiments may be realized by reference to the following figures. In the appended figures, similar components or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.
FIG. 1A depicts a simplified, cross-sectional view of an example gas processing system according to embodiments of the disclosure.
FIG. 1B depicts a simplified, cross-sectional view of the temperature measurement system of FIG. 1A according to embodiments of the disclosure.
FIG. 2A depicts an isometric view of an example temperature measurement system in a closed position according to embodiments of the disclosure.
FIG. 2B depicts a cross-sectional view of the temperature measurement system of FIG. 2A along Section A-A according to embodiments of the disclosure.
FIG. 2C depicts a cross-sectional view of the temperature measurement system of FIG. 2A along Section B-B according to embodiments of the disclosure.
FIG. 2D depicts an isometric view of the temperature measurement system of FIG. 2A in an open position according to embodiments of the disclosure.
FIG. 3A depicts an isometric view of an example temperature measurement system according to embodiments of the disclosure.
FIG. 3B depicts a cross-sectional view of the temperature measurement system of FIG. 3A along Section C-C according to embodiments of the disclosure.
FIG. 4 depicts a flowchart for adjusting operating conditions of a gas processing system according to embodiments of the disclosure.

### DETAILED DESCRIPTION

The present disclosure provides a temperature measurement system for use in providing temperature measurements of a first gas in a gas processing component (e.g., an SMR system or the like). The gas processing component includes a gas conduit (e.g., a catalyst tube in the SMR system or the like) that carries the first gas to a mixing section in the gas processing component where the first gas is mixed with a second gas. The temperature measurement system includes a gas conduit extension coupled to an outlet of the gas conduit prior to the mixing section to receive the first gas exiting the gas conduit and a temperature sensor (e.g., inside a thermowell) received in the gas conduit extension to receive temperature measurements of the first gas in the gas conduit extension. In this manner, the temperature sensor measures the temperature of the first gas before the first gas mixes with the second gas. However, in some cases, the gas conduit may undergo thermal deformation due the gas processing component undergoing large temperature changes when in operation and when not in operation. If such thermal deformation is unaccounted for, the gas conduit moves the temperature measurement device (e.g., an elongated portion, such as an elongated shaft or thermowell, including a temperature sensor) when the gas conduit deforms, thus increasing the risk of damage to the temperature measurement device.

The gas conduit extension addresses this by defining an expansion opening that receives the temperature measurement device (e.g., a thermowell or elongated shaft). When the gas conduit undergoes thermal deformation and moves the gas conduit extension, the gas conduit extension also moves relative to the temperature device through the temperature device sliding in the expansion opening. In this manner, the position of the temperature device in the gas conduit extension does not move relative to other parts of the temperature measurement system (e.g., a flanged base coupled to an exterior flanged surface of the housing of the gas processing equipment from which the temperature measurement device extends from) due to the thermal deformation of the gas conduit. As such, the temperature device measure the first gas exiting the gas conduit, before the first gas mixes with another gas, while minimizing the risk of damage to the temperature device.

Although the following description will describe the temperature measurement system being used in a steam methane reformer, particularly a recuperative steam methane reformer, it should be understood that the temperature measurement system is usable with other gas processing components in which it is desirable to measure a temperature of a gas flow prior to it mixing with another gas in the gas processing component. For example, the temperature measurement system can be used in other industrial processes involving mixing gases, such as food processing, pharmaceutical manufacturing, oil refining, cracking processes, or the like.

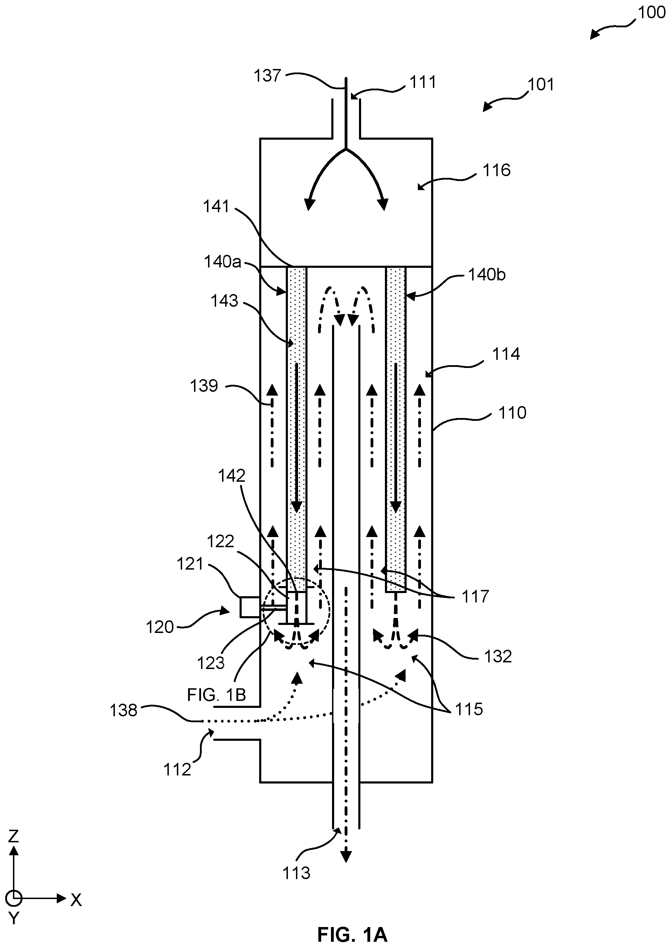

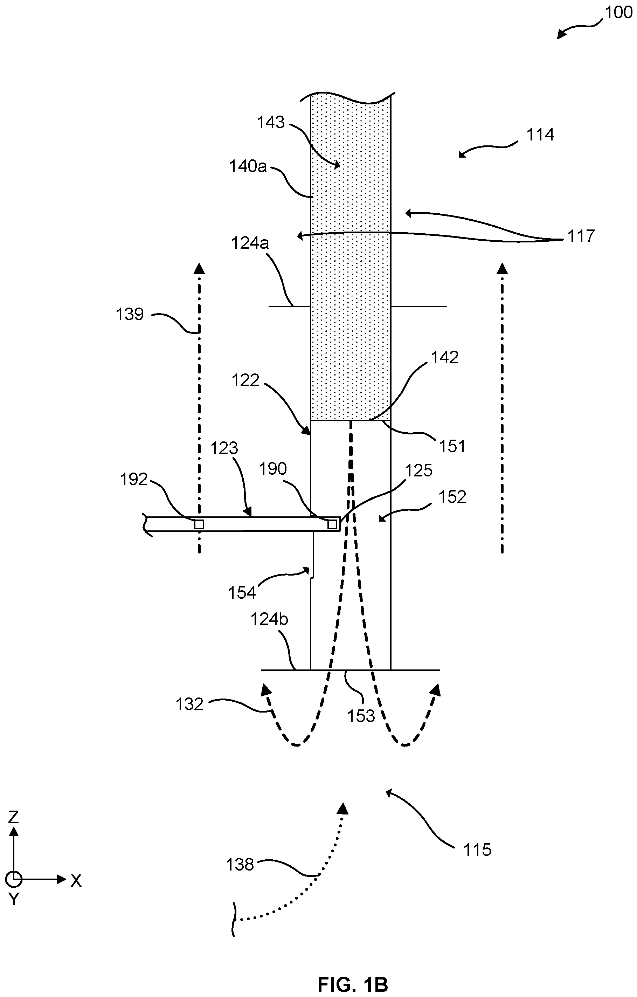

FIGS. 1A and 1B depicts a simplified cross-sectional view of a gas processing component 101 of a gas processing system 100. In this particular example, the gas processing component 101 is a steam methane reformer (e.g., a recuperative heat transfer reactor that can be as an extension part of a steam methane reforming plant) in which a hot gas outlet from a main steam methane reformer is used to provide heat for the reforming reactions occurring in the gas processing component 101 in parallel to the main reactor. Prior art recuperative heat transfer reactors were configured for performance assessment via monitoring of temperatures at the inlets and mixed outlet of the reactor. In some examples of the present disclosure, temperature can also be monitored at the outlet of the gas conduit prior to mixing with surrounding gas in a shell-side side stream of the reactor, which may allow a better understanding of the reaction inside the gas conduit as well as analyzing overall performance of the gas processing component.

The gas processing component 101 includes an internal volume 114 including a first mixing section 115 in which a first gas flow 137 mixes with a second gas flow 138. For example, as shown in FIG. 1, the gas processing component 101 includes a housing 110 defining the internal volume 114, an inlet 111 for receiving the first gas flow 137 (e.g., a pre-heated mixture of feed gas and steam, or the like, as denoted by the solid line arrows) into a header volume 116 of the housing 110, a syngas inlet 112 for receiving the second gas flow 138 (e.g., a syngas, such as syngas coming from a steam reforming unit in parallel with the gas processing component 101, as denoted by the dotted line arrows), and an outlet 113 for mixed gas flow 139 (e.g., after the first gas flow 137 mixes with the second gas flow 138, as denoted by the dashed-dotted line arrows) to exit the gas processing component 101. The housing 110 may include an annular structure (e.g., a tube structure or the like), however, in other embodiments, the housing may have other shapes.

The gas processing component 101 includes a first gas conduit 140a and a second gas conduit 140b positioned in the interior volume 114. The gas conduits 140a, 140b carry the first gas flow 137 from the header volume 116 into the first mixing section 115. Although two gas conduits 140a, 140b are depicted, in other embodiments, there may be more or less than two gas conduits, such as one, three, four, five, or the like. The first gas conduit 140a and the second gas conduit 140b may be substantially similar. As such, for the sake of brevity, the following description will be directed to the first gas conduit 140a as, it is understood that the description of the first gas conduit 140a may be applicable to the second gas conduit 140b. However, in other embodiments, the first gas conduit may be different than the second gas conduit in shape, size, or the like.

The first gas conduit 140a has an annular structure (e.g., a tube structure or the like) that defines a gas conduit internal passageway 143 to carry the first gas flow 137 from the header volume 116 into the first mixing section 115. The first gas conduit 140a includes a gas conduit inlet end 141 and a gas conduit outlet end 142, in the internal volume 114, defining the gas conduit internal passageway 143 therebetween. The conduit internal passageway 243 houses a steam methane reforming reaction catalyst that facilitates a steam methane reforming reaction in the internal passageway, forming a syngas 132 that exits the first gas conduit 140a at the gas conduit outlet end 142. The gas conduit inlet end 141 receives the first gas flow 137 from the header volume 116 and the syngas 132 exits the first gas conduit 140a at the gas conduit outlet end 142. In particular, the heat from the second gas flow 138 heats up the first gas conduit 140a to a sufficient temperature to allow the first gas flow 137 to react in the first gas conduit 140a such that the syngas 132 (e.g., as denoted by the dashed line arrows) is formed. The syngas 132 exits the first gas conduit 140a to mix with the second gas flow 138 entering the syngas inlet 112 in the first mixing section 115 of the internal volume 114 and form the mixed gas flow 139. The mixed gas flow 139 flows up in a Z-direction along an outer surface of a side of the first gas conduit 140a as a side stream flow, while continuing to mix with the first gas flow 137 along an outer surface of the first gas conduit 140a in a second mixing section 117 of the first mixing section 115, before flowing back down in a Z-direction through the outlet 113 to exit the gas processing component 101. A further discussion of the operation of a recuperative steam methane reformer can be found in U. S.P.N. 11,661,340 and European Pat. No. EP4279445B1.

As noted above, it may be beneficial to perform temperature measurements on the syngas 132 just as it exits the first gas conduit 140a, prior to the syngas 132 mixing with the second gas flow 138 in the first mixing section 115, in order to better understand the reaction efficiency occurring within the first gas conduit 140a. For instance, the reaction efficiency in the first gas conduit 140a can be determined with these measurements and the operating conditions of the gas processing component 101 may be adjusted to optimize its efficiency. Whereas, in conventional systems, only the measurements at the inlets and outlets of the gas processing component 101 were taken (i.e., the inlet 111 and outlet 113), the gas processing system 100 addresses this issue by providing a temperature measurement system 120. In particular, the temperature measurement system 120 can take the temperature measurements of the syngas 132 exiting the gas conduit outlet end 142 of the first gas conduit 140a prior to syngas 132 mixing with the second gas flow 138. In other embodiments, the temperature measurement system may measure the temperature of the syngas within the second gas conduit. In yet other embodiments, there may be multiple temperature measurement systems (e.g., a temperature measurement system for each gas conduit).

The temperature measurement system 120 includes a base 121 mounted to an exterior surface of the housing 110 and an elongated portion 123 extending from the base 121 into the internal volume 114. The base 121 can include a flanged structure that is coupled to an exterior surface (e.g., a flanged exterior surface) of the housing 110. The base 121 includes one or more electronic components, including electronic components that can transmit temperature measurements to a computer system for further analysis. In at least some implementations, the elongated portion 123 may be a thermowell or elongated shaft that houses one or more temperature sensors that can measure temperature of the syngas 132.

Turning to FIG. 1B, the temperature measurement system 120 includes a gas conduit extension 122 mounted at the gas conduit outlet end 142. In this manner, the syngas 132 flows out of the gas conduit outlet end 142 and through the gas conduit extension 122 prior to the syngas 132 flowing into the first mixing section 115. The gas conduit extension 122 defines an internal passageway extension 152 in fluid communication with the gas conduit internal passageway 143. The gas conduit extension 122 is defined between a first gas conduit extension end 151 and a second gas conduit extension end 153. The first gas conduit extension end 151 is fluidly coupled to the gas conduit outlet end 142 and the internal passageway extension 152 terminates at the second gas conduit extension end 153 such that the gas conduit extension 122 is in fluid communication with the first gas conduit 140a. In this manner, the syngas 132 flows directly from the gas conduit outlet end 142 of the first gas conduit 140a through the first gas conduit extension end 151 prior to the syngas 132 exiting the second gas conduit extension end 153 and entering the first mixing section 115. There may be no pressure difference between internal passageway extension 152 and exterior to the gas conduit extension 122.

The gas conduit extension 122 may have a same or similar internal diameter as the first gas conduit 140a. However, in other embodiments, the gas conduit extension and the gas conduit may have different internal diameters. For example, as will be discussed further below, in some embodiments, the gas conduit may be partially received in the gas conduit extension. In this example, the gas conduit extension may have a larger diameter than the gas conduit. However, in other embodiments, the gas conduit may partially receive the gas conduit extension and the gas conduit may have a larger diameter than the gas conduit extension.

The gas processing component 101 includes a first wall 124a and a second wall 124b. The first gas conduit 140a is coupled to the first wall 124a such that a position of the first gas conduit 140a is maintained relative to the other internal components of the gas processing component 101. The gas conduit extension 222 is coupled to the second wall 124b such that a position of the second gas conduit 140b is maintained relative to the other internal components of the gas processing component 101. The first gas conduit 140a and the gas conduit extension 122 may be respectively coupled to the walls 124a, 124b through welding, brazing, fastening, or the like. The walls 124a, 124b are coupled along an interior surface of the housing 110, or to internal components in the housing 110, through welding, brazing, fastening or the like. Although two walls 124a, 124b are depicted, in other embodiments, there may be more or less than two walls, such as one, three, four, five, or the like. In other embodiments, there may be no walls. In this example, the gas conduit and the gas conduit extension may be coupled to each other through welding, brazing, fastening or the like.

At least a portion of the thermowell or elongated portion 123 extends into the gas conduit extension 122. For example, a distal end 125 of the elongated portion 123 extends into the gas conduit extension 122. In one example, the elongated portion 123 may be a thermowell that houses a multi-point thermocouple that can take temperature measurements along different portions of the elongated portion 123. In this example, the distal end 125 of the elongated portion 123 includes a first temperature measuring point 190 positioned to measure a temperature of the syngas 132 flowing through the gas conduit extension 122. Measuring the second syngas 132, by itself, with the elongated portion 123 may be helpful to understand the reaction efficiency in the gas conduit 140. In some embodiments, the elongated portion 123 may additionally include a second temperature measuring point 192 along an intermediate portion of the elongated portion 123 outside of the gas conduit extension 122 that is positioned to measure a temperature of gas outside of the gas conduit extension 122 (e.g., temperature measurements of the mixed gas flow 139 flowing along an outer surface of the gas conduit extension 122). Each of the measuring points 190, 192 may correspond to a temperature sensor within the elongated portion 123. Measuring the mixed gas flow 139 with the elongated portion 123 may be helpful to understand how the second gas flow 138 interacts with the syngas 32. However, in other embodiments, the temperature measurement system may only have one measuring point, such as the first measurement at a distal end of the elongated portion. In yet other embodiments, there may be more than two measuring points, such as three, four, five, or the like. The distal end 125 includes a diameter of between about 15 mm and 40 mm, such as between about 20 mm and 35 mm, such as between about 25 mm and 30 mm, or the like.

As noted above, the internal components of the gas processing component 101 (e.g., the gas conduits 140a, 140b) undergo deformation when in use due to the high operating temperatures of the gas processing component 101. This deformation may result in those internal components expanding and contracting relative to each other as the temperature of the gas processing component 101 changes such that those internal components move relative to certain portions of the temperature measurement system 120 (e.g., the base 121 and the elongated portion 123). For example, such thermal deformation may result in the first gas conduit 140a moving the first gas conduit extension 122 (e.g., in a Z-direction). This movement, if unaccounted for, can result in the first gas conduit extension 122 moving the elongated portion 123 (e.g., bending the elongated portion 123) relative to the base 121, which can increase the risk of damage to the temperature measurement system 120.

The gas conduit extension 222 accounts for this relative movement by defining an expansion opening 154 extending from exterior of the gas conduit extension 122 to the internal passageway extension 152 to receive the elongated portion 123. The expansion opening 154 is sized and shaped to accommodate the elongated portion 123 such that, during thermal deformation of the internal components of the gas processing component 101, the expansion opening 154 allows the elongated portion 123 to in the expansion opening 154 when the gas conduit extension 122 moves. For example, the expansion opening 154 allows the gas conduit extension 122 to move relative to the elongated portion 123 such that the gas conduit extension 122 does not impinge on (e.g., does not cause displacement of) the elongated portion 123 during thermal deformation between a first un-expanded state and a second expanded state. In this manner, the risk of damage to the temperature measurement system 120 from thermal deformation of the internal components of the gas processing component 101 may be minimized. In some embodiments, the expansion opening 154 can be slot-shaped, however, in other embodiments, the expansion opening can have any other shape to accommodate the relative movement of the gas conduit extension to the elongated portion when the elongated portion is received in the expansion opening.

The expansion opening 154 is defined along an intermediate portion of the gas conduit extension 122, however, in other embodiments, the expansion opening may be defined along any portion of the gas conduit extension, such as adjacent the first and second gas conduit extension ends of the gas conduit extension. The distal end 125 of the elongated portion 123 is received through the expansion opening 154 into the internal passageway extension 152 in an X-direction. The expansion opening 154 includes a length that accounts for the thermal deformation of the internal components of the gas processing component 122 (e.g., the first gas conduit 140a). For example, the length of the expansion opening 354 is between about 80 mm and 170 mm, such as between about 100 mm, and 150 mm, such as between about 120 mm and 130 mm, or the like.

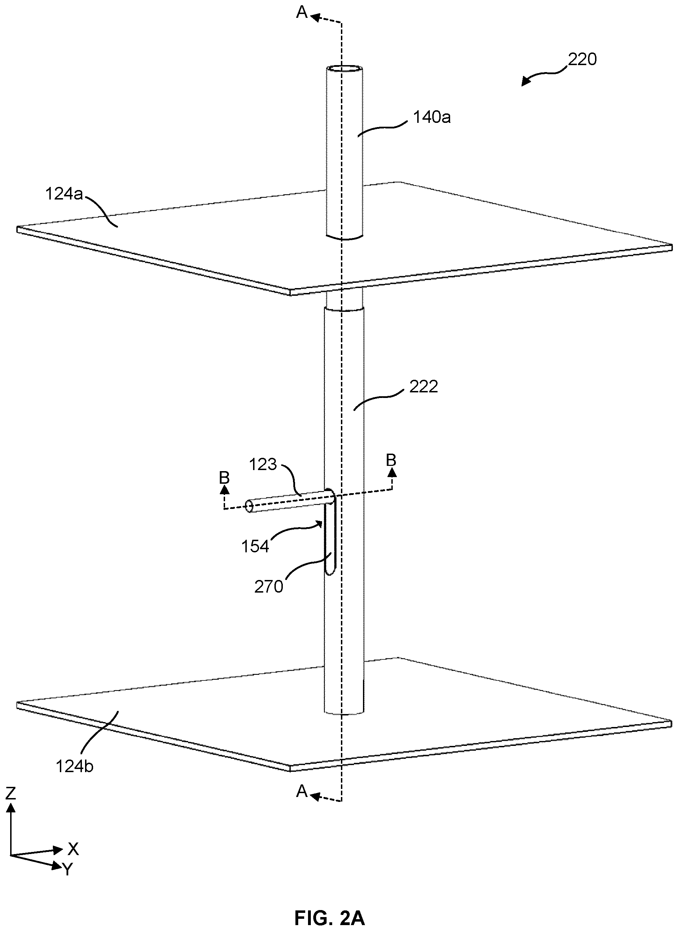

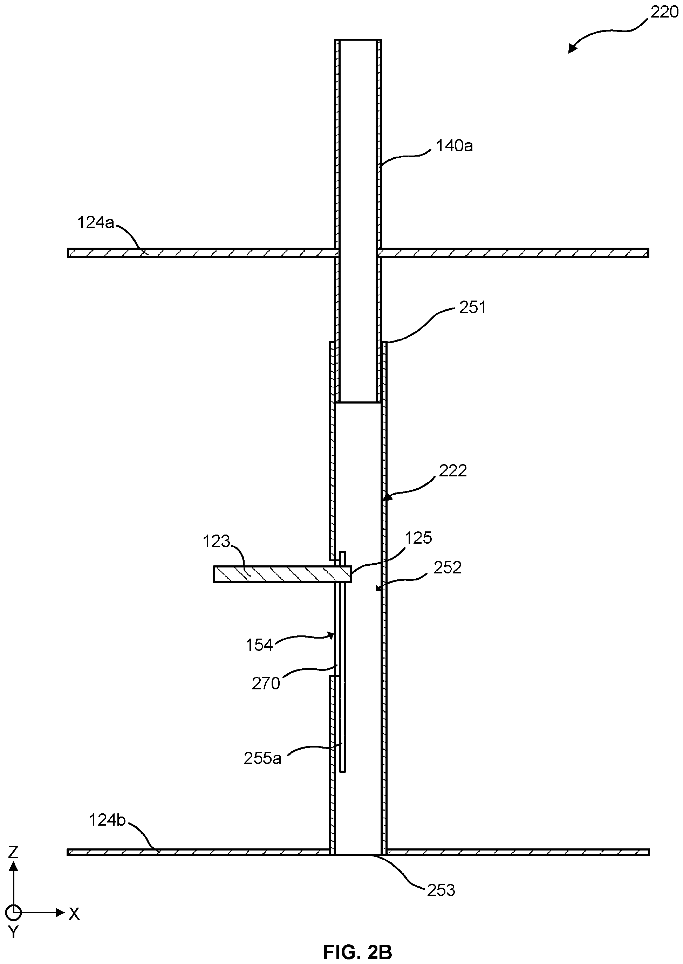

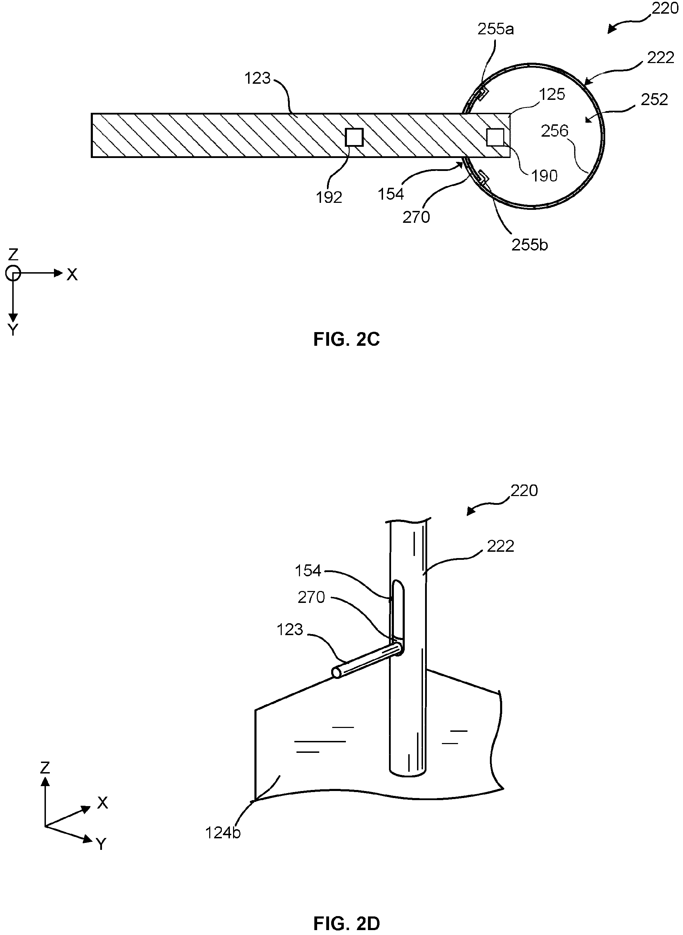

Due to the turbulent nature of the gas processing component 101 during operation, the mixed gas flow 139 may infiltrate into the internal passageway extension 152 from the expansion opening 154. The infiltration of the mixed gas flow 139 may result in the temperature measurement system 120 measuring the temperature of both the mixed gas flow 139 and the syngas 132 in the internal passageway extension 152, rather than just the syngas 132. As such, it may be beneficial to additionally provide a cover to minimize this infiltration. For example, FIGS. 2A-2C depict a temperature measurement system 220. FIG. 2B depicts a cross-sectional view of the temperature measurement system 220 along Section A-A. FIG. 2C depicts a cross-sectional view of the temperature measurement system 220 along Section B-B. It is understood that features ending in like reference numerals as features discussed above are similar, except as noted below. For the sake of brevity, certain components may be omitted, such as the base and a proximal portion of the elongated portion coupled to the base.

Turning to FIG. 2B, the gas conduit extension 222 defines an internal passageway extension 252 between the first gas conduit extension end 251 and the second gas conduit extension end 253. The gas conduit outlet end 142 of the first gas conduit 140a is received through the first gas conduit extension end 251 such that the first gas conduit 140a is partially received in the gas conduit extension 222. However, as noted above, in other embodiments, the gas conduit extension may be received in the first gas conduit. In a yet further alternative, the gas conduit extension may be coupled to the first gas conduit such that the first gas conduit extension end is directly coupled to the outlet of the first gas conduit.

The temperature measurement system 220 includes a cover 270 extending from the elongated portion 123. For example, the cover 270 is fixedly coupled to the elongated portion 123 (e.g., through fastening or the like) such that the position of the cover 270 is maintained with the position of the elongated portion 123. For example, the elongated portion 123 extends through a hole defined in the cover 270. The cover 270 at least partially covers the expansion opening 154 when the internal components of the gas processing component is undergoing thermal deformation. Turning to FIG. 2C, the cover 270 be coupled to an intermediate portion of the elongated portion 123, such as before the first temperature measuring point 190 along the X-direction, so that the first temperature measuring point 190 may measure the syngas in the gas conduit extension 222 while the cover 270 prevents gas from entering the gas conduit extension 222 through the expansion opening 154. However, in other embodiments, the cover may be coupled to the distal end of the elongated portion in line with the first temperature measuring point.

The gas conduit extension 222 includes a first track 255a and a second track 255b extending from an interior surface 256 of the gas conduit extension 222 into the internal passageway extension 252. In some embodiments, the tracks 255a, 255b may be coupled to the interior surface 256 (e.g. through welding, brazing, fastening, or the like). However, in other embodiments, the tracks may be monolithically formed with the gas conduit extension. The tracks 255a, 255b extends substantially perpendicularly from the interior surface 156 into the internal passageway extension 252 with an L-shape. However, in other embodiments, the tracks may not have an L-shape and, instead, may have a curved shape or other shapes that can slidably receive the cover.

The cover 270 is received in the internal passageway extension 252 between the first track 355a and the second track 355b such that the cover 270 is slidably received in the tracks 255a, 255b. The cover 270 is movable (e.g., slidable) within the tracks 255a, 255b in a Z-direction between a first, closed position, as shown in FIG. 2A, and a second, open position, as shown in FIG. 2D. In the closed position, the first gas conduit 140a coupled to the gas conduit extension 222 is in an expanded state (e.g., when the gas processing component is in use) and the cover 270 at least partially covers the expansion opening 154 such that gas may be prevented from flowing in and out of the internal passageway extension 252 through the expansion opening 154. For example, in some embodiments, the cover 270 covers a portion of the expansion opening 154 that is not already covered by the elongated portion 123 (e.g., the entirety of the expansion opening 154 that is not already covered by the elongated portion 123). In other embodiments, in the closed position, the cover 270 leaves a portion of the expansion opening exposed in the closed position. Turning to FIG. 2D, in the open position, the first gas conduit 140a coupled to the gas conduit extension 222 is in an un-expanded state (e.g., when the gas processing component is not in use). In this position, the cover 270 exposes at least a portion of the expansion opening 154 such that gas may flow into and out of the internal passageway extension 252 through the expansion opening 154. For example, the cover 270 exposes the portion of the expansion opening 154 that is not already covered by the elongated portion 123. However, in other embodiments, in the open position, the cover may partially cover a portion of the expansion opening that is not already covered by the elongated portion. In this manner, as the first gas conduit 140 transitions between a first un-expanded state to a second expanded state, the cover 270 extending from the elongated portion 123 moves to cover the expansion opening 154.

As such, when the gas processing component is in use and in the closed position, the cover 270 prevents gas from entering the internal passageway extension 252 through the expansion opening 154 while the syngas from the first gas conduit 140a flows within the internal passageway extension 252. Turning to FIG. 2C, while in the closed position, the first temperature measuring point 190 in the elongated portion 123 measures the gas flowing through the internal passageway extension 252 while minimizing the risk of gas ingress into the internal passageway extension 252 from the expansion opening 154. In this manner, the cover 270 allows for the first temperature measuring point 390 to measure just the syngas exiting the first gas conduit 140a without other gases mixing with the syngas), therefore providing a more accurate indication of the reaction efficiency within the gas conduit. The cover 270 slides within the tracks 355a, 355b may be particularly beneficial where the gas flow surrounding the exterior of the gas conduit extension 222 is turbulent because the cover 270 prevents the turbulent flow outside the gas conduit extension 222 from entering through the expansion opening 154, which would negatively impact on the ability of the temperature sensor in the elongated portion 123 to accurately measure the temperature of just the gas exiting the first gas conduit 140a. In other embodiments, the temperature measurement system may not include the cover and tracks, such as when the gas flow being measured is not turbulent.

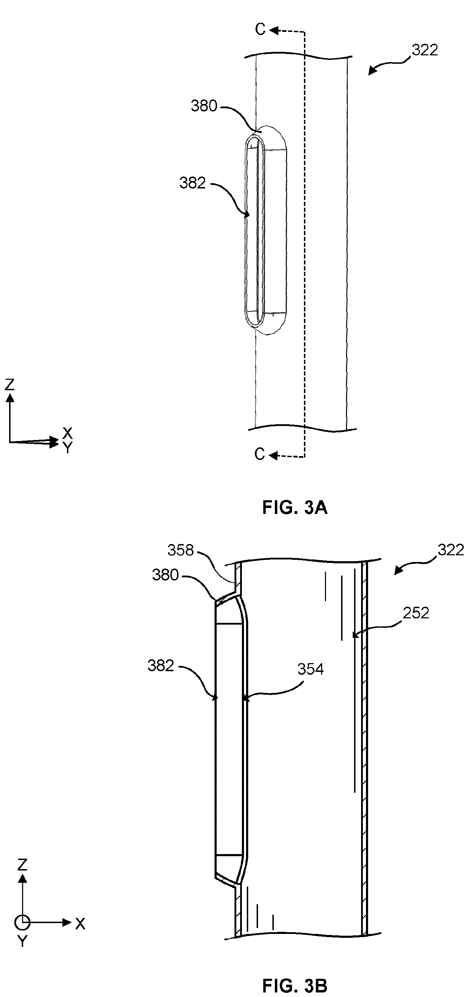

In some embodiments, additional measures may be provided to mitigate the flow of gas entering the expansion opening. For example, FIGS. 3A and 3B depict an example gas conduit extension 322. FIG. 3A depicts an isometric view of the temperature measurement system 320 and FIG. 3B depicts a cross-sectional view of the temperature measurement system 320 along Section C-C. It is understood that features ending in like reference numerals as features discussed above are similar, except as noted below.

The gas conduit extension 322 includes a raised rim 380 extending from an exterior surface 358 of the gas conduit extension 322 to further mitigate gas ingress into the internal passageway extension 352 through the expansion opening 354. The raised rim 380 fully encircles the expansion opening 354. However, in other embodiments, the rim may encircle only a portion of the expansion opening. The raised rim 380 defines a rim opening 382 sized and shaped to receive another component of the temperature measurement system (e.g., the elongated portion 123, as shown in FIGS. 2A-2D). Additionally, the length of the raised rim 380 accounts for the predicted thermal deformation of the internal components of the gas processing component, such as being between about 80 mm and 170 mm, such as between about 100 mm, and 150 mm, such as between about 120 mm and 130 mm, or the like.

The raised rim 380 extends from the exterior surface 358 at an inward angle toward a center of the rim opening 382 such that turbulent gases outside of the gas conduit extension 322 may be directed away from the expansion opening 354. As such, the raised rim 380 can further inhibit the risk of unwanted gas ingress into the internal passageway extension 352 through the rim opening 382 and expansion opening 354. However, in other embodiments, the rim may not be angled and, instead, the rim may perpendicularly extend from the exterior surface of the gas conduit extension. Where the raised rim 380 is angled inward, the rim opening 382 has a smaller circumference than the expansion opening 354. However, where the rim perpendicularly extends from the exterior surface of the gas conduit extension, the rim expansion opening and the expansion opening of the gas conduit extension may include a similar circumference.

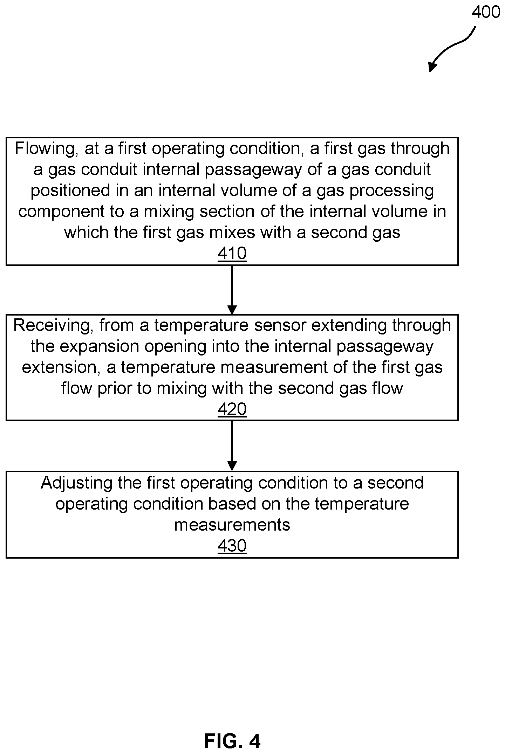

FIG. 4 depicts an example flowchart showing a process 400 for adjusting operating conditions of a gas processing system. Block 410 includes flowing, at a first operating condition, a first gas through a gas conduit internal passageway of a gas conduit positioned in an internal volume of a gas processing component to a mixing section of the internal volume in which the first gas mixes with a second gas. For example, turning to FIG. 1A, the first gas flow 137 flows into the gas processing component 101 and into the gas conduit internal passageway 143 of the gas conduit 140 positioned in the internal volume 114 of the gas processing component 101 to the first mixing section 115. The gas processing component 101 is operating at a first operating condition. The operating conditions of the gas processing component 101 includes a temperature of the first gas flow 137, a composition of the first gas flow 137 (e.g., the steam-to-carbon ratio or the like), or the like. The gas processing component 101 includes a temperature measurement system 120 including a gas conduit extension 122 and an elongated portion 123. The elongated portion 123 extends from the base 121 coupled to an exterior surface of the housing 110 into the gas conduit extension 122. In particular, turning to FIG. 1B, the elongated portion 123 extends through the expansion opening 154 into the internal passageway extension 152. The elongated portion 123 includes a first temperature measuring point 190 at the distal end 125 of the elongated portion 123 that is positioned to receive temperature measurements of the syngas 132 flowing in the internal passageway extension 152. In some embodiments, the elongated portion 123 includes a second temperature measuring point 192 along an intermediate portion of the elongated portion 123 that is positioned to receive temperature measurements of the syngas 132 flowing outside of the gas conduit extension 122.

The expansion opening 154 can accommodate the elongated portion 123 such that the gas conduit extension 122 can move (e.g., along a Z-direction) relative to the elongated portion 123. In this manner, the risk of damaging the temperature measurement system 120 through the relative movement of different portions of the temperature measurement system 120 (e.g., the base 121 and the elongated portion 123) from thermal deformation of the gas processing component 101 can be minimized. In some embodiments, turning to FIGS. 2A-2C, the temperature measurement system 120 includes a cover 270 extending from the elongated portion 123 that slides within the tracks 255a, 255b as the gas conduit extension 222 and the elongated portion 123 move relative to each other. In particular, the cover 270 can move an open position, where the cover 270 at least partially exposes the expansion opening 154 (shown in FIG. 2D), to a closed position, where the cover 270 at least partially closes the expansion opening 154 (shown in FIG. 2A). Alternatively or additionally, in another embodiment, turning to FIGS. 3A and 3B, the temperature measurement system 320 includes a raised rim 380 extending from the exterior surface 358 of the gas conduit extension 322 to guide gas outside of the gas conduit extension 322 away from the expansion opening 354.

Block 420 includes receiving, from a temperature sensor inside of an elongated portion of a temperature measurement device, a temperature measurement of the first gas flow prior to mixing with the second gas flow. For example, turning to FIG. 1B, a temperature sensor inside the elongated portion 123 (e.g., corresponding to the first temperature measuring point 190) extends through the expansion opening 154 of the gas conduit extension 122 into the internal passageway extension 152 to receive temperature measurements of the syngas 132 receives temperature measurements of the syngas 132 exiting the gas conduit outlet end 142 of the gas conduit 140, prior to the syngas 132 mixing with the second gas flow 138 in the first mixing section 115. These temperature measurements can be sent to a computer system that is in electronic communication with the temperature measurement system 120 (e.g., electronic components housed in the base 121, as shown in FIG. 1A).

Block 430 includes adjusting the first operating condition a second operating condition based on the temperature measurements. For example, turning to FIG. 1A, the computer system analyzes the reaction efficiency of the first gas flow 137 in the gas conduits 140a, 140b based on the received temperature measurements. Based on this analysis, the computer system may determine that the operating conditions of the gas processing component 101 can be adjusted to increase the reaction efficiency in the gas conduits 140a, 140b. This may include sending instructions to adjust a flow rate of one or more of the gas flows 137, 138, (e.g., adjusting the ration of the gas flows 137, 138) or the like

In the foregoing specification, embodiments of the disclosure have been described with reference to numerous specific details that can vary from implementation to implementation. The specification and drawings are, accordingly, to be regarded in an illustrative rather than a restrictive sense. The sole and exclusive indicator of the scope of the disclosure, and what is intended by the applicants to be the scope of the disclosure, is the literal and equivalent scope of the set of claims that issue from this application, in the specific form in which such claims issue, including any subsequent correction. The specific details of particular embodiments can be combined in any suitable manner without departing from the spirit and scope of embodiments of the disclosure.

Additionally, spatially relative terms, such as "bottom" or "top" and the like can be used to describe an element and/or feature's relationship to another element(s) and/or feature(s) as, for example, illustrated in the figures. It will be understood that the spatially relative terms are intended to encompass different orientations of the device in use and/or operation in addition to the orientation depicted in the figures. For example, if the device in the figures is turned over, elements described as a "bottom" surface can then be oriented "above" other elements or features. The device can be otherwise oriented (e.g., rotated 90 degrees or at other orientations) and the spatially relative descriptors used herein interpreted accordingly.

Terms "and," "or," and "an/or," as used herein, may include a variety of meanings that also is expected to depend at least in part upon the context in which such terms are used. Typically, "or" if used to associate a list, such as A, B, or C, is intended to mean A, B, and C, here used in the inclusive sense, as well as A, B, or C, here used in the exclusive sense. In addition, the term "one or more" as used herein may be used to describe any feature, structure, or characteristic in the singular or may be used to describe some combination of features, structures, or characteristics. However, it should be noted that this is merely an illustrative example and claimed subject matter is not limited to this example. Furthermore, the term "at least one of' if used to associate a list, such as A, B, or C, can be interpreted to mean any combination of A, B, and/or C, such as A, B, C, AB, AC, BC, AA, AAB, ABC, AABBCCC, etc.

Reference throughout this specification to "one example," "an example," "certain examples," or "exemplary implementation" means that a particular feature, structure, or characteristic described in connection with the feature and/or example may be included in at least one feature and/or example of claimed subject matter. Thus, the appearances of the phrase "in one example," "an example," "in certain examples," "in certain implementations," or other like phrases in various places throughout this specification are not necessarily all referring to the same feature, example, and/or limitation. Furthermore, the particular features, structures, or characteristics may be combined in one or more examples and/or features.

In some implementations, operations or processing may involve physical manipulation of physical quantities. Typically, although not necessarily, such quantities may take the form of electrical or magnetic signals capable of being stored, transferred, combined, compared, or otherwise manipulated. It has proven convenient at times, principally for reasons of common usage, to refer to such signals as bits, data, values, elements, symbols, characters, terms, numbers, numerals, or the like. It should be understood, however, that all of these or similar terms are to be associated with appropriate physical quantities and are merely convenient labels. Unless specifically stated otherwise, as apparent from the discussion herein, it is appreciated that throughout this specification discussions utilizing terms such as "processing," "computing," "calculating," "determining," or the like refer to actions or processes of a specific apparatus, such as a special purpose computer, special purpose computing apparatus or a similar special purpose electronic computing device. In the context of this specification, therefore, a special purpose computer or a similar special purpose electronic computing device is capable of manipulating or transforming signals, typically represented as physical electronic or magnetic quantities within memories, registers, or other information storage devices, transmission devices, or display devices of the special purpose computer or similar special purpose electronic computing device.

In the preceding detailed description, numerous specific details have been set forth to provide a thorough understanding of claimed subject matter. However, it will be understood by those skilled in the art that claimed subject matter may be practiced without these specific details. In other instances, methods and apparatuses that would be known by one of ordinary skill have not been described in detail so as not to obscure claimed subject matter. Therefore, it is intended that claimed subject matter not be limited to the particular examples disclosed, but that such claimed subject matter may also include all aspects falling within the scope of appended claims, and equivalents thereof.

### EXAMPLES

The disclosure provides further examples as follows:
1. A system comprising any or all of the following:
   a) a gas processing component comprising an internal volume, the internal volume comprising a first mixing section in which a first gas flow mixes with a second gas flow;
   (b) a gas conduit comprising a gas conduit internal passageway configured to carry the first gas flow to the first mixing section, the gas conduit further comprising a gas conduit outlet end in the internal volume;
   (c) a gas conduit extension mounted at the gas conduit outlet end, the gas conduit extension comprising:
      (i) an internal passageway extension in fluid communication with the gas conduit internal passageway, the internal passageway extension terminating at a gas conduit extension outlet end in fluid communication with the first mixing section; and
      (ii) an expansion opening extending from an exterior of the gas conduit extension to the internal passageway extension; and
   (d) a temperature measurement device comprising an elongated portion extending through the expansion opening into the internal passageway extension, the temperature measurement device further comprising a temperature sensor inside the elongated portion and located in the internal passageway extension to measure a temperature of the first gas flow prior to mixing with the second gas flow.
2. The system of example 1 wherein the temperature sensor comprises a thermocouple.
3. The system of example 1 further comprising a thermocouple assembly comprising a flanged base, and an elongated shaft or thermowell extending from the base, wherein:
   the flanged base is mounted to a flanged exterior housing of the gas processing component;
   the elongated shaft includes the temperature sensor; and
   the elongated shaft extends through the expansion opening of the gas conduit extension.
4. The system of example 3 wherein the elongated shaft comprises the thermowell housing the temperature sensor.
5. The system of example 1 wherein the gas conduit extension further comprises a raised rim extending around the expansion opening.
6. The system of example 5 wherein:
   the raised rim defines a rim opening;
   the raised rim extends from the gas conduit extension at an angle towards a center of the rim opening; and
   the elongated portion extends through the rim opening.
7. The system of example 1 wherein the gas conduit is expandable when heated from a first un-expanded state to a second expanded state, wherein the gas conduit extension is configured such that the gas conduit extension does not impinge on the temperature sensor when the gas conduit expands from the first un-expanded state to the second expanded state.
8. The system of example 7 further comprising a cover extending from the elongated portion.
9. The system of example 8 wherein the gas conduit extension includes tracks extending into the internal passageway extension and the cover is slidably received in the tracks.
10. The system of example 9 wherein the cover covers the expansion opening when the gas conduit is in the expanded state.
11. The system of example 10 wherein the expansion opening comprises an at least partially uncovered portion when the gas conduit is in the un-expanded state.
12. The system of example 1 wherein the gas processing component is a steam methane reformer.
13. The system of example 12 wherein the gas conduit internal passageway comprises a steam methane reforming reaction catalyst.
14. The system of example 13 wherein the first mixing section comprises a second mixing section in which the first gas flow mixes with a side stream flow flowing along an outer surface of the gas conduit.
15. The system of example 1 wherein:
   the elongated portion further comprises a second temperature sensor located to measure a temperature of the first gas flow mixed with the second gas flow; and
   the second temperature sensor is positioned outside of the internal passageway extension.
16. A method of using a system comprising any or all of:
   (a) flowing a first gas flow through a gas conduit internal passageway of a gas conduit positioned in an internal volume of a gas processing component to a first mixing section of the internal volume in which the first gas flow mixes with a second gas flow, wherein:
      the first gas flow is flowed with a first ratio of the first gas flow to the second gas flow; and
      the system includes a gas conduit extension mounted at a gas conduit outlet end including:
         an internal passageway extension in fluid communication with the gas conduit internal passageway, the internal passageway extension terminating at a gas conduit extension outlet end in fluid communication with the first mixing section; and
         an expansion opening extending from an exterior of the gas conduit extension to the internal passageway extension;
   (b) receiving, from a temperature sensor inside of an elongated portion of a temperature measurement device extending through the expansion opening into the internal passageway extension, a temperature measurement of the first gas flow prior to mixing with the second gas flow; and
   (c) adjusting the first ratio to a second ratio of the first gas flow to the second gas flow based on the temperature measurement.
17. The method of example 16 wherein:
   the elongated portion includes an elongated shaft or a thermowell; and
   receiving the temperature measurement includes receiving the temperature measurement from the temperature sensor positioned in the elongated shaft or thermowell.
18. The method of example 16 further comprising allowing the gas conduit extension to move relative to the elongated portion within the expansion opening as the gas conduit transitions between an un-expanded state to an expanded state.
19. The method of example 18 wherein, as the gas conduit transitions between the un-expanded state to an expanded state, a cover extending from the elongated portion moves to cover the expansion opening.
20. The method of example 16 further comprising inhibiting gas flow into the expansion opening with a raised rim extending around the expansion opening.

## Claims

1. A system comprising:
a) a gas processing component comprising an internal volume, the internal volume comprising a first mixing section in which a first gas flow mixes with a second gas flow;
(b) a gas conduit comprising a gas conduit internal passageway configured to carry the first gas flow to the first mixing section, the gas conduit further comprising a gas conduit outlet end in the internal volume;
(c) a gas conduit extension mounted at the gas conduit outlet end, the gas conduit extension comprising:
(i) an internal passageway extension in fluid communication with the gas conduit internal passageway, the internal passageway extension terminating at a gas conduit extension outlet end in fluid communication with the first mixing section; and
(ii) an expansion opening extending from an exterior of the gas conduit extension to the internal passageway extension; and
(d) a temperature measurement device comprising an elongated portion extending through the expansion opening into the internal passageway extension, the temperature measurement device further comprising a temperature sensor inside the elongated portion and located in the internal passageway extension to measure a temperature of the first gas flow prior to mixing with the second gas flow.

2. The system of claim 1 wherein the temperature sensor comprises a thermocouple.

3. The system of claim 1 further comprising a thermocouple assembly comprising a flanged base, and an elongated shaft or thermowell extending from the base, wherein:
the flanged base is mounted to a flanged exterior housing of the gas processing component;
the elongated shaft includes the temperature sensor; and
the elongated shaft extends through the expansion opening of the gas conduit extension.

4. The system of claim 3 wherein the elongated shaft comprises the thermowell housing the temperature sensor.

5. The system of claim 1 wherein the gas conduit extension further comprises a raised rim extending around the expansion opening.

6. The system of claim 5 wherein:
the raised rim defines a rim opening;
the raised rim extends from the gas conduit extension at an angle towards a center of the rim opening; and
the elongated portion extends through the rim opening.

7. The system of claim 1 wherein the gas conduit is expandable when heated from a first un-expanded state to a second expanded state, wherein the gas conduit extension is configured such that the gas conduit extension does not impinge on the temperature sensor when the gas conduit expands from the first un-expanded state to the second expanded state; further comprising a cover extending from the elongated portion; wherein the gas conduit extension includes tracks extending into the internal passageway extension and the cover is slidably received in the tracks; and wherein the system is configured so that the cover covers the expansion opening when the gas conduit is in the expanded state.

8. The system of claim 6 wherein the expansion opening comprises an at least partially uncovered portion when the gas conduit is in the un-expanded state.

9. The system of claim 1 wherein the gas processing component is a steam methane reformer, and wherein the gas conduit internal passageway comprises a steam methane reforming reaction catalyst; optionally, wherein the first mixing section comprises a second mixing section in which the first gas flow mixes with a side stream flow flowing along an outer surface of the gas conduit.

10. The system of claim 1 wherein:
the elongated portion further comprises a second temperature sensor located to measure a temperature of the first gas flow mixed with the second gas flow; and
the second temperature sensor is positioned outside of the internal passageway extension.

11. A method of using a system comprising:
(a) flowing a first gas flow through a gas conduit internal passageway of a gas conduit positioned in an internal volume of a gas processing component to a first mixing section of the internal volume in which the first gas flow mixes with a second gas flow, wherein:
the first gas flow is flowed with a first ratio of the first gas flow to the second gas flow; and
the system includes a gas conduit extension mounted at a gas conduit outlet end including:
an internal passageway extension in fluid communication with the gas conduit internal passageway, the internal passageway extension terminating at a gas conduit extension outlet end in fluid communication with the first mixing section; and
an expansion opening extending from an exterior of the gas conduit extension to the internal passageway extension;
(b) receiving, from a temperature sensor inside of an elongated portion of a temperature measurement device extending through the expansion opening into the internal passageway extension, a temperature measurement of the first gas flow prior to mixing with the second gas flow; and
(c) adjusting the first ratio to a second ratio of the first gas flow to the second gas flow based on the temperature measurement.

12. The method of claim 11 wherein:
the elongated portion includes an elongated shaft or a thermowell; and
receiving the temperature measurement includes receiving the temperature measurement from the temperature sensor positioned in the elongated shaft or thermowell.

13. The method of claim 11 further comprising allowing the gas conduit extension to move relative to the elongated portion within the expansion opening as the gas conduit transitions between an un-expanded state to an expanded state.

14. The method of claim 13 wherein, as the gas conduit transitions between the un-expanded state to an expanded state, a cover extending from the elongated portion moves to cover the expansion opening.

15. The method of claim 11 further comprising inhibiting gas flow into the expansion opening with a raised rim extending around the expansion opening.
